# EUROPEAN PATENT SPECIFICATION

(11) **EP 1 614 821 B1**
(45) Date of publication and mention of the grant of the patent: **13.05.2009**
(21) Application number: 04024321.4
(22) Date of filing: 12.10.2004
(51) Int. Cl.: E04B 2/74

(54) **Partition wall system for offices and the like with a closure device for wall panels**
Trennwandsystem für Büros od. dgl. mit Verschlussvorrichtung für Wandpaneele
Système de cloison pour bureaux ou similaires avec dispositif de fermeture pour panneaux muraux

(30) Priority: 07.07.2004 DE 102004032866
(43) Date of publication of application: 11.01.2006
(73) Proprietor: Steelcase S.A., 67200 Strasbourg (FR)
(72) Inventor: Oberlé, Jean-Marc, 67310 Cosswiller (FR); Fiegel, Yannick, 67700 Haegen (FR)
(74) Representative: Bockhorni & Kollegen

(56) References cited:
- DE-A1- 10 051 761
- US-A1- 2002 124 510

## Description

The invention concerns a closure device for wall panels of a partition wall system for offices and the like in accordance with the preamble of claim 15 and a partition wall system for offices and the like with a closure device for wall panels in accordance with the preamble of claim 1.

Partition wall systems for offices and the like are generally constructed of several partition wall elements that can be combined with each other in different configurations for designing corresponding workplaces in offices. Essential criteria for such partition wall systems are simple assembly and wide variability, such that later changes to the workplace layout are possible, and also an appealing optical design, such that additional trim and covers for such partition wall elements are not necessary. Corresponding partition wall systems are generally known, such as US-PS 5,394, 658, which describes partition wall elements that are formed from a frame with vertical uprights that are connected to each other by profile-shaped cross-beams. With such partition wall systems, individually designed workplaces can be created.

An appealing, optical trim of the partition wall systems is obtained on one hand by forming the visible side of the partition wall elements with clip-on wall panels which essentially yield a flush shape of the two front sides of the partition wall elements. On the other, wall panels are also used that can be arranged vertically or horizontally on the partition wall systems in order, for example, in a translucent formation to serve as a translucent screen between various work sections of an open plan office and also as an elegant, freestanding finish to the partition wall systems.

A closure device respectively a partition wall system is also disclosed in US 2002/0124510 A1 which have the features of the preamble of claim 15 respectively of the preamble of claim 1. The wall elements respectively wall panels are fixed by mounting brackets with closure devices based on a groove and tongue connection comprising T-nut retainers and screws.

So far, the individual parts of the partition wall systems, especially the wall panels with the uprights or cross-beams, have been connected by screw joints or combined insert-screw joints.

Object of the invention is therefore to provide a closure device for wall panels of a partition wall system and a partition wall system with a closure device for wall panels for offices and the like that permits rapid, simple assembly and disassembly of panels, wall panels and the like and features major variability in its arrangement.

This object is achieved in accordance with the invention by the features contained in the characterising part of claim 1 and of claim 15, with expedient further development of the invention characterised by the features contained in the subclaims.

In accordance with the invention, the partition wall system comprises a closure device for wall panels with a plinth-like base part, an insert shoulder and a receptacle for a wall panel and the like. The closure device features a bolt head having a bar member arranged in a recess of the insert shoulders. Preferably the bar member comprises several laterally extending bars, particularly two oppositely arranged bars. The bar member respectively the bars, for their part, each have a ramp-like tapered surface, leading cams or the like for clamping the base part to the outer surface of an upright or cross-beams or supports of the partition wall system, for a clamping connection between the wall panels to the partition wall system. To this end, the supports, i.e. uprights or cross-beams, are provided with elongated slots that are formed by grooves or the like and into which the base part with insert shoulder can be inserted. The bolt head preferably is of smaller width on its narrow side than the slot width in the uprights and cross-beams, but of greater width, however, than the slot width on the longitudinal side with the bars. As a result, the connecting rods can be introduced with the locking heads into the slot of the uprights or cross-beams, after which simply turning the bolt head effects locking of the wall panel to the uprights or cross-beams, with the bolt head then engaging with the undercut slot.

This closure device facilitates rapid closure by a clamping effect. Thus, assembly on location proceeds simply by inserting and locking the wall panel into corresponding slots of cross-beams or uprights of a partition wall system. Assembly in this connection is fast and easy. Moving the wall panels or disassembling them in the event of changes to the workplace can be performed simply without further ado since the wall panels are removable when the closure device is in the unlocked position. This facilitates great variability of the arrangement of the wall panels on the partition wall system.

If the bolt head is spring loaded during locking, permanent locking is safeguarded. Moreover, the load on the closure device is reduced in the case of shear pressure that may occur if pressure is exerted against the wall panel. In such a case, the spring loaded lock can namely yield and so facilitate deflection of the wall panel.

The bolts are preferably formed on an actuating element, especially an actuating handle or corresponding button accommodated in a recess of the base part. Thus, no additional tools are necessary, with the result that assembly, moving and disassembly are performed even more easily and more quickly.

Advantageously, the base part is clamped against the outer surface of the upright or the cross-beam in a first position of the actuating handle and, in a second position, is freely movable, and the actuating handle, when in the first position, does not project beyond the lateral outer walls of the base part, and, in the second position, projects laterally in relation to the outer walls. The closure device is then particularly economically and safely designed since the closure device, in the standard case, i.e. the locked position, has no projecting parts and so the partition wall system has essentially smooth walls in the assembled state and the actuating handle is readily actuated during assembly in the unlocked position. At the same time, a projecting actuating handle indicates immediately that the closure device is in the unlocked position.

Advantageously, the actuating handle on each side of the closure device has a handle or lever and so has a double-sided design. This facilitates assembly, moving and disassembly of the wall panels, since the closure device can now be actuated from all sides.

Advantageously, the insert shoulder has a trapezoidal profile and/or chamfered edges. Thus, the closure device can readily be inserted into the slot of the partition wall system and/or pushed into the unlocked position. Moreover, one or more runners may be provided that project laterally and/or on the lower side relative to the insert shoulders. These runners, which, for example, may consist of Teflon, additionally reduce friction when the closure device is being inserted and moved.

If the actuating handle comprises a bolt on which the bars are arranged, the closure device can have a slim design. By way of elastically compressible material, a plastic sleeve, an annular spring or the like may be provided to effect the pretensioning. Preferably, the elastically compressible material surrounds the bolt and is secured by means of one or more washers and an appropriate fixing, such as a tensioning washer or the like. The bolt can then be connected to the actuating element via a plug connection or screw connection or the like, such that the closure device can be assembled from individual components that are easily replaced.

Especially advantageously, the wall panel receptacle features a recess for double-sided containment of the wall panel, with the wall panel being fixed in the receptacle by a plug, screw or adhesive connection or the like. Such a receptacle permits an elegant, window-like connection between the wall panel and the partition wall system. The stability of the receptacle for the wall panel can further be increased by designing the receptacle in an L-shape to contain a corner of the wall panel. Additionally, the connection between the wall panel and the receptacle can be facilitated by a two-part receptacle design.

Bracing of the two-part receptacle, which, for example, can be effected by screwing or by means of dowels, holds the wall panel in place. Naturally, any other suitable means of attachment for the wall panel to the closure device is possible, such as provision for a U-shaped receptacle on the upper end of the base part or screwing the wall panel to the base part via a rebate.

Preferably, the closure device contains a wall panel holder which is especially formed as a U-shaped profile rail the lower external faces of which taper into a V-shape, and which surrounds and holds the edge of the lower side of the wall panel. Especially in the case of long wall panels, this offers additional rigidity for the wall panel. Moreover, this panel holder can connect flush to the insert shoulder, such that the entire lower edge of the wall panel is completely accommodated by the slot of the cross-beam or upright of the partition wall system. Such a connection between the wall panel and the partition wall system is not only elegant, but also avoids slits of light that can cause dazzling in the various work areas and the receptacle for the wall panel is additionally rendered stiffer relative to the partition wall system. However, the ability to yield to shear forces is maintained by the V-shaped tapering lower outer faces.

The closure device is therefore ideally suited to the cross-beams and uprights and makes it possible, when the closure device has been opened by turning the actuating handle or optionally any other actuating button, to remove the wall panel from a cross-beam and to transfer it to another cross-beam or upright or to move it on the cross-beam or upright itself. As a result, high variability in workplace design is facilitated. The wall panels are therefore mountable horizontally on the cross-beams in a standing or hanging arrangement and, equally, vertically on the uprights, as a result of which the scope for using the closure device is obtained. The closure device is suitable especially for the described partition wall system of cross-beams and uprights, with, however, independent protection sought for the closure device.

Embodiments of a partition wall system are described below with the aid of the drawing. In it,
- Fig. 1: is a three-dimensional partial view of a partition wall element,
- Fig. 2: is a sectional view through an embodiment of a cross-beam of the partition wall system,
- Fig. 3: is a sectional view through an embodiment of a further cross-beam,
- Fig. 4: is a sectional view through an embodiment of an upright of the partition wall system,
- Fig. 5: is a 3D view of a closure device with a wall panel,
- Fig. 6: is an illustration of a part of the closure device,
- Fig. 7: is an illustration of the part of the closure device in Fig. 6 in a locked position,
- Fig. 8: is an exploded illustration of a part of a further embodiment of the closure device,
- Fig. 9: a 3D diagram of the bolt of the closure device in Fig. 8.
- Fig. 10: is a sectional view of the closure device of Fig. 8 in the locked position,
- Fig. 11: a 3D sectional view of the closure device with the wall panel of Fig. 8., and
- Fig. 12: is an exploded view of the connection between the closure device and the wall panel of Fig. 8.

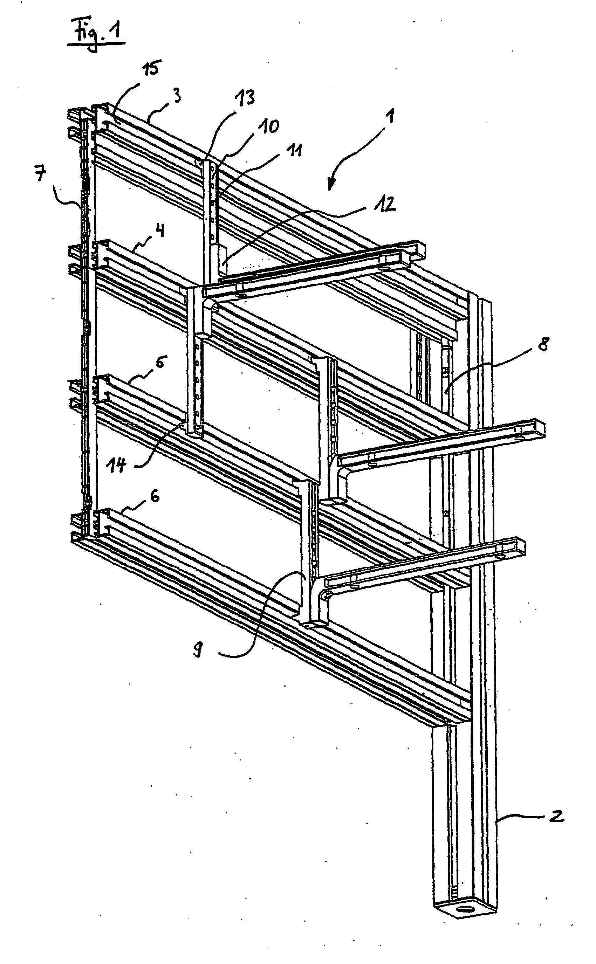

Fig. 1 is a purely schematic diagram of a partition wall element 1, that is, for example, suitable for use with the closure system for wall panels of the invention. Partition wall element 1 is, for example, constructed from two vertical uprights 2, of which only the right-hand upright 2 is shown in Fig. 1, and from cross-beams 3, 4, 5, and 6 extending between the two uprights 2. The end faces of cross-beams 3 to 6 are joined by two connecting rods 7 and 8 to form an assembly unit, which is called the fence unit or simply fence 9 and which can be attached to vertical uprights 2 via connecting rods 7 and 8. Connecting rods 7 and 8 are screwed to the end faces of cross-beams 3 to 6. As a result, further components of a partition wall system can be mounted by suitable means of attachment to cross-beams 3 to 6, as illustrated by the shelf bracket 9 arranged on the cross-beams, that are formed from a fastening support 10 with engagement holes 11 and a shelf arm 12, which are connectable to the engagement holes via corresponding engagement formations. These shelf brackets 9, of which, for the sake of example only, four are shown in Fig. 1 in different arrangements at the cross-beams, serve to support shelves that are not illustrated. Fastening support 10 of shelf bracket 9 is hooked into or inserted into a slot 15, running the length of cross-beams 3 to 6, via a hook-in lip 13 formed at its upper end and an insert nose 14 formed at its lower end, with no other means of attachment being necessary for the shelf brackets, and these are otherwise slidable along slot 19 in suitable alignment on the cross-beams.

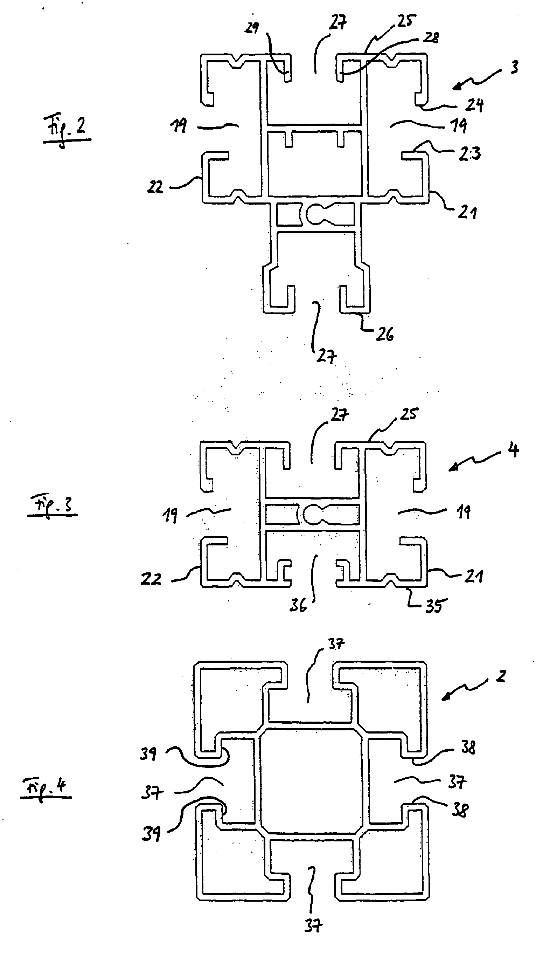

Fig. 2 shows a cross-section of the upper cross-beam 3. As can be seen, the cross-section has a T-shape and is formed as a multi-chamber hollow profile. The side faces 21 and 22 of cross-beam 3 each have a slot 19 along the length of the profile. Slot 19 is limited on the side by inwardly projecting ribs 23 and 24, with the free ends of ribs 23 and 24 forming catch shoulders for attaching further elements of the partition wall system, such as the hook-in element of the shelf brackets with hook-in lip 17 and insert nose 18 described with the aid of Fig. 1. In the case of a shelf bracket, hook-in lip 17 hooks in behind inwardly projecting rib 24, which is formed shorter than rib 23.

Further, the upper side 25 and lower side 26 of cross-beam 3 in turn have a continuous slot 27 along the length of the profile, which are limited laterally by inwardly projecting ribs 28 and 29 and which find application for engagement with connecting rods 7, 8 and the closure system described below.

Like the profiles shown in Figs. 3 and 4, cross-beam 3 is made by extruding metal, especially aluminium, and specifically with a continuous uniform cross-section, such that the cross-beams can each be cut to suitable length. The slots are formed continuously along the length of the profile.

Fig. 3 shows the cross-section through cross-beams of a fence, which are each positioned beneath an upper cross-beam 3 in T-shape in accordance with Fig. 2. The cross-section of the cross-beam which is visible in Fig. 3 and which may be cross-beam 4, 5 or 6 from Fig. 1 has a multi-chamber hollow profile in square section, and specifically with rectangular cross-section. Since the cross-beams shown in Figs. 2 and 3 have a number of design similarities, the same reference numbers are used for the comparable parts in Fig. 3 as in Fig. 2. As may be seen, provision is made for slots 19 on the two opposite side-walls 21, 22, and a corresponding slot 27 on the upper side 25. Slots 19 and 27 are limited laterally by corresponding inwardly projecting ribs.

As a modification of cross-beam 3 in accordance with Fig. 2, cross-beam 4 does not have a T-shape, but rather the lower side 35 of the beam is formed as a flat surface that nevertheless has a slot 36 having the same width dimensions as slots 19 and 27.

Fig. 4 shows the cross-section of an upright 2, which is formed analogously to the multi-chamber hollow profile and has a square shape with a quadratic cross-section. Slots 37 are formed on all four sides of upright 2, which slots are laterally limited by inwardly projecting walls 38 that are provided with an outwardly projecting crimp 39. The width of slot 37 is equal to the width of slots 27 and 36 and preferably also equal to the width of slot 19. The profile of the uprights 2 with the four slots on the four side-walls is designed such that partition wall elements or fences can be connected to all four sides by inserting the connecting rods correspondingly. In so far, uprights 2 can be used to form the partition wall elements into a corner or to connect partition wall elements in series along a plane. The described cross-sections of the cross-beams and their formation as multi-chamber hollow profiles yield a simple and lightweight construction of very great stability, so that the partition wall elements created therefrom are formed correspondingly stiff and load-bearing.

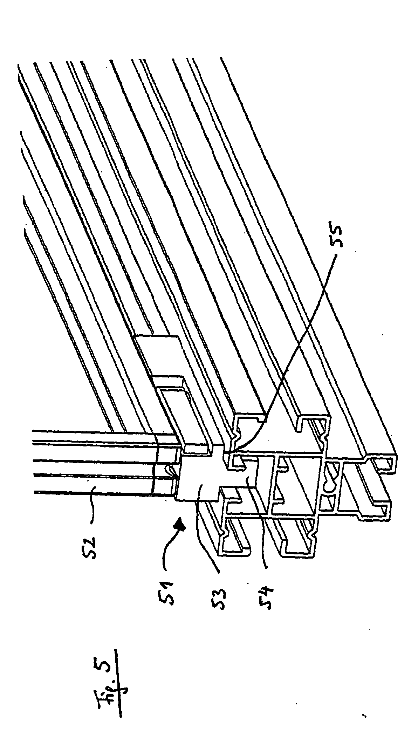

Fig. 5 shows the closure device 51 that serves to attach wall panels 52 mounted appropriately thereon to the cross beams 3, 4 or uprights 2. Fig. 5 shows the lower edge of the wall panel 52 and, more precisely, only the left corner, with the right corner being provided analogously with a closure device 51. As may be seen, the closure device has a plinth-like base 53, on whose lower edge a downwardly projecting insert shoulder 54 is formed. This shoulder 54 is arranged roughly in the centre, such that catch shoulders 55 are formed on both sides of base part 53. In the embodiment shown in Fig. 5, the closure device 51 is arranged on a cross-beam 3 in accordance with the embodiment of Fig. 2. The insert shoulder 54 is inserted into slot 27, with catch surfaces 55 making contact with the outer face of the cross-beam (see Fig. 5).

It is, however, also possible to arrange closure device 51 on a cross-beam 3 in accordance with the embodiment of Fig. 3 or on an upright 2 in accordance with the embodiment of Fig. 4. The insert shoulder 54 is then inserted into slots 27 or 37, with catch surfaces 55 making contact with the outer face of the cross-beam 3 or upright 2. The use of the closure device 51 of the invention is not, however, restricted to slots 27 and 37 limited laterally via ribs 28, 29 or walls 38, but rather it may be used also with a slotted panel, in which case it engages the panel directly. Thus it is possible to have an all-round, i.e. horizontal and vertical, arrangement of wall panels on one partition wall system.

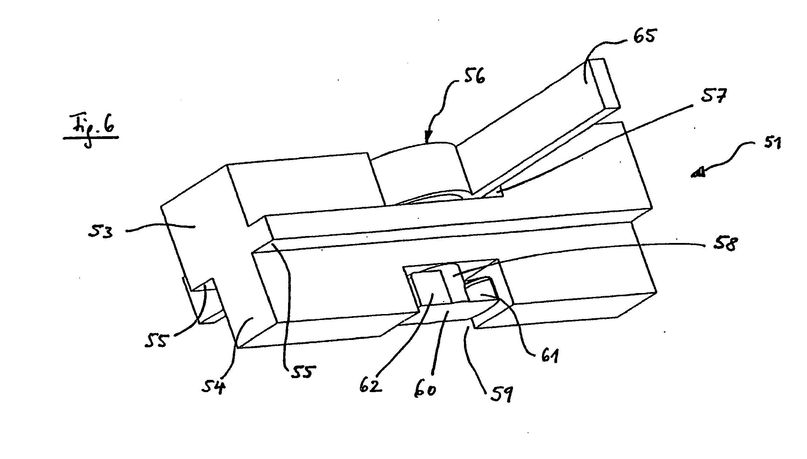

For locking, closure device 51 has a handle element 56 as shown in Fig. 6 that is arranged in a recess 57 of the base part 53. The actuating handle 56 penetrates with bolt 58 an opening in base part 53 and projects into recess 59 of insert shoulder 54. The end of bolt 58 is fitted with a locking head 60 that has two bars 61 and 62 that project radially from bolt 58.

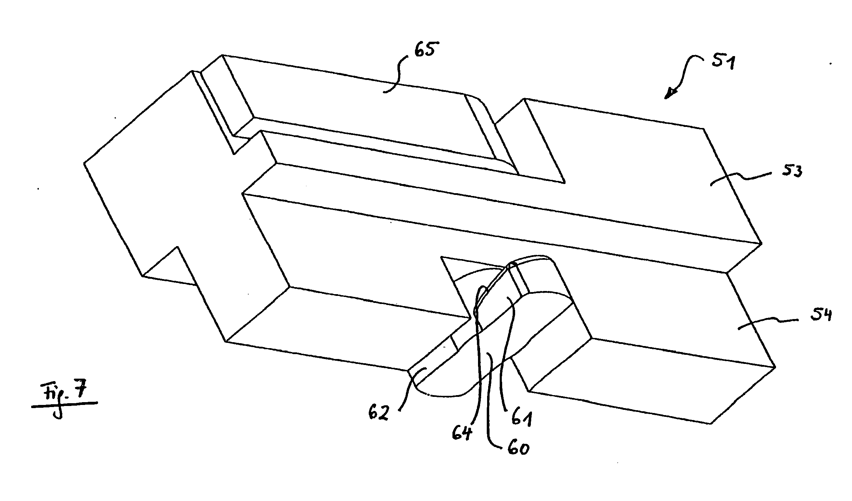

As best seen in Fig. 7, but also apparent from Fig. 6, the upper surfaces of bars 61 and 62, i.e. those facing base part 53, are fitted with tapered ramps, which are formed to the same extent on both bars and of which only ramp 64 is illustrated in Fig. 7. As a consequence of the tapered ramps, bars 61 and 62 become thicker, more precisely in anticlockwise direction with reference to Fig. 6, such that the surface of bar 61 facing the viewer has a smaller height than bar 62.

If actuating handle 56, which has two horizontally arranged wing-like handles 56, is turned, and more precisely through 90°, such that handle 65 is in the position illustrated in Fig. 7, bolt head 60 is also turned through 90°, and, more precisely, from the unlocked position illustrated in Fig. 6 into the locked position illustrated in Fig. 7, with the rising tapers or tapered surfaces 64 pressing the closure device 51, and hence also the wall panel 52 accommodated by the closure device 51, against the outer surface 25 of cross-beam 3 in accordance with Fig. 2, with bars 61 and 62 engaging the inwardly projecting ribs 28 and 29 in accordance with Fig. 2. Not shown in the figures is an interbedded compression spring beneath actuating handle 56 that safeguards the clamping position in the locked position.

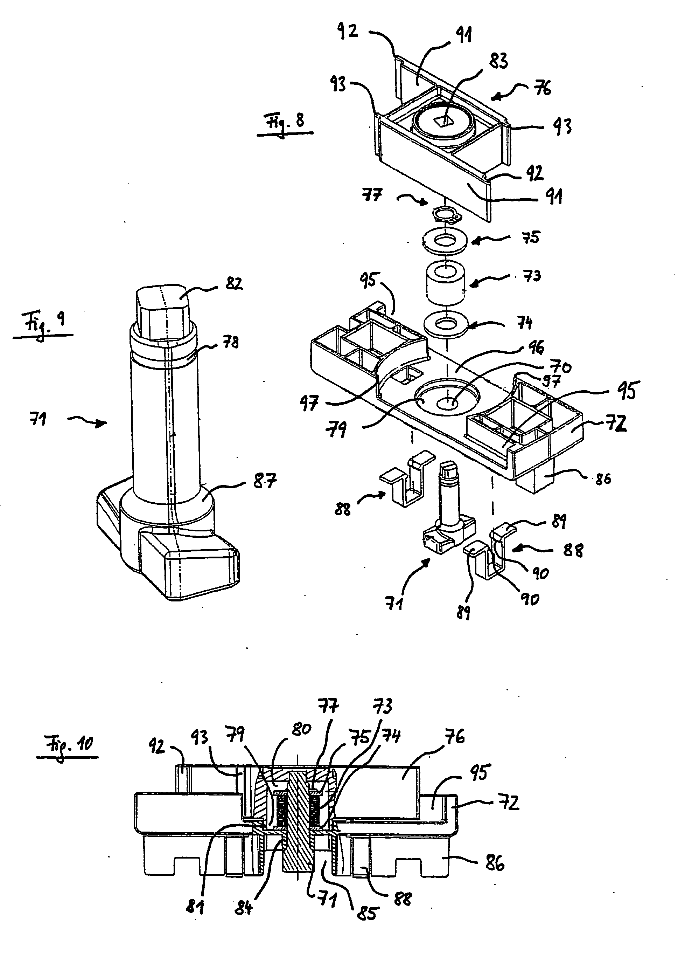

Figs. 8 to 12 show parts of a further embodiment of the closure device of the invention. In this embodiment, provision is made in the through-handle opening 70 (Fig. 8) of bolt 71 for a bushing 73 surrounding bolt 71 of base part 72, said bushing being made of elastically compressible material, such as an appropriate plastic or rubber or as spring that safeguards the clamping position in the locking position. Between base part 72 and bushing 73 and bushing 73 and turning handle 76 are located washers 74, 75 and secured with a tensioning washer 77, which is arranged in a groove 78 around bolt 71 (Fig. 9). Through arrangement in a circular recess 79 in base part 72 and in a cylindrical recess 80 of turning handle 76 (Fig. 10), bushing 73, washers 74, 75 and tensioning washer 77 are completely surrounded by base part 72 and turning handle 76. Turning handle 76 fits snugly via annular ring 81 into recess 79, while bolt 71 fits snugly via a quadratic connector 82 into a corresponding recess 83 of turning handle 76 (Figs. 8 and 9). In this regard, bolt 71 is embedded in base part 72 via annular rib 84, which extends into the recess 85 of insert shoulder 86 (Fig. 10). Annular rib 84 is rounded on its inside edge and engages with an oppositely shaped shoulder 87 (Fig. 9) so as to limit the spring travel of spring loaded bolt 71.

To improve the sliding capability of the closure device, insert shoulder 86 is fitted with two runners 88, which are arranged in front of and behind recess 85 and project in relation to insert shoulder 86 both laterally and towards the floor. Thus, tilting of insert shoulder 86 within a slot can be effectively prevented. Runners 88, which can consist of an appropriate plastic, e.g. Teflon, envelop insert shoulder 86 and engage thereby with corresponding flat recesses (not shown) in insert shoulder 86. For support, runners 88 have laterally angled feet 89, which engage with corresponding flat recesses in the lower side of base part 72. By means of hooks 90, which project from the feet into runner 88, runners 88 engage with corresponding recesses in the flat recesses of insert shoulders 86 and are thus held removably in place against this. Thus, runners 88 can be easily replaced when worn out. To facilitate insertion of insert shoulders 86 into a slot, these and runners 88 may have a trapezoidal shape.

Turning handle 76 in Fig. 8 has a double-sided design and also features two levers 91 opposite each other arranged anticlockwise relative to the axis of rotation. To improve the ergonomics and to increase the safety of the closure device, each lever 91 is shaped flat with regard to the side surfaces of the closure device and has an undercut part 92 at the free end of lever 91 and, at the fixed end of lever 91, a rearward projecting rib 93 that is set back in relation to the outer surface of lever 91. In the closed condition of the closure device, the free ends of levers 91 are accommodated in appropriate recesses 95 of the lower section of base part 86. The free ends of levers 91 do not completely fill recesses 95, with the result that there is enough free space available for the fingers to be able to grasp the rear side of lever 91. This grasping is facilitated by undercuts 92. Moreover, ribs 93 make contact with projections 97 that extend into the recess 96 of lower part 86 of base part 72 and so limit the turning path of turning handle 76. This prevents the closure device from being turned beyond the locking position.

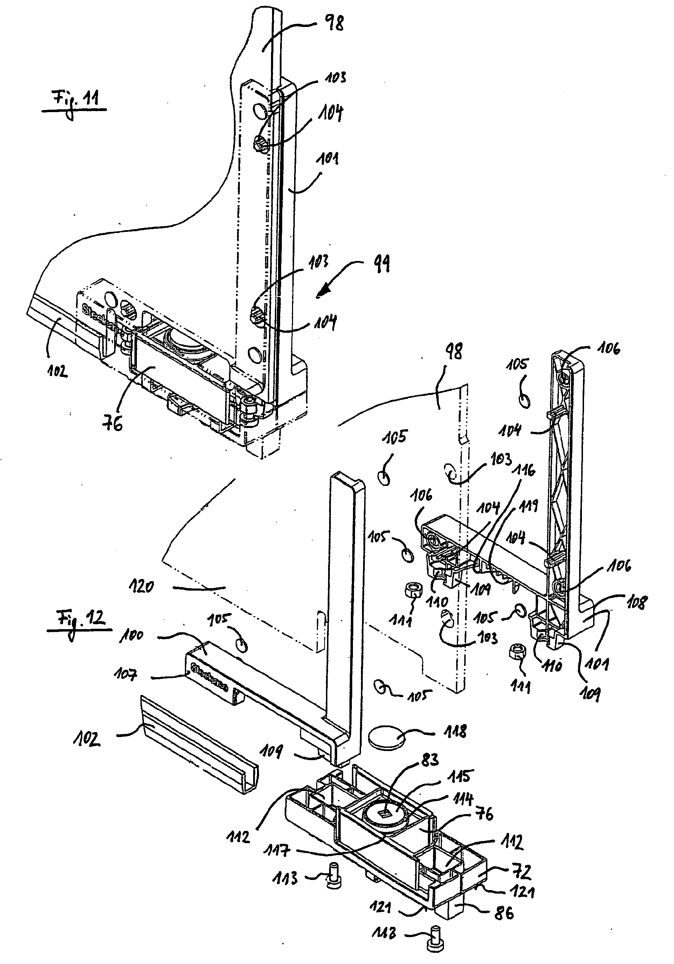

Figures 11 and 12 illustrate the connection of a wall panel 98 with a closure device 99 in the form of a cross-section and an exploded view. Closure device 99 comprises a base part 72 with centrally arranged insert shoulders 86, a double-sided turning handle 76, a two-part receptacle 100,101 of wall panel 98 and a wall panel holder 102. The two-part receptacle 100,101 is L-shaped and adapted so as to accommodate a corner of wall panel 98. To this end, wall panel 98 has bores 103 and receptacle 100, 101 laterally has inwardly projecting locking pin receptacles (not shown) and locking pins 104 (Fig. 12). Locking pins 104 penetrate the bores 103 (Fig. 11) and, for their part, are embraced by the locking pin receptacles, which also penetrate bores 103. The connection between locking pins 104 and locking pin receptacles can be effected by a clamping or adhesive effect or similar.

Base part 72 with insert shoulder 86, turning handle 76 and receptacle 100, 101 are made from a zinc alloy or aluminium, with the result that the closure device is of a very stable design. Bolt 71 consists preferably of a suitable metal alloy, which is coated with Teflon to enhance rotatability.

To prevent direct contact between wall panel 98 and receptacle 100, 101 and so to avoid wear and noise development, provision is made for buffer platelets 105 of a suitable plastic that are arranged in receptacles 106 of wall panel receptacles 100, 101 and form an elastic buffer between wall panel and wall panel receptacle 100, 101.

Base parts 107, 108 of wall panel receptacle 100, 101 have a lateral shape that is symmetrical to that of base part 72 in order to accommodate turning handle 76 projecting upward beyond base part 72. Receptacle 100, 101 is provided with two feet 109 that have a fixing receptacle 110 for nuts 111. Feet 109 of receptacle 100, 101 engage with corresponding receptacles 112 of base part 72 in which screws 113 are arranged that effect a screw connection with nuts 111 of feet 109 and so connect receptacle 100,101 with base part 72.

For bedding relative to wall panel receptacle 100, 101, turning handle 76 features a setback disc-shaped element 114 which essentially closes flush with the upper side of turning handle 76 (Fig. 12) and in which receptacle 83 for bolt 71 is arranged axially in recess 115. As a counter-piece for this bed, receptacle 100,101 features an annular rib 116, which encircles disc-like element 114 and rests on lateral shoulder 117 of disc-like element 114. Receptacle 115 accommodates a rubber spacer disc 118 of an appropriate plastic or rubber that is in contact with the transverse ribs 119 running around the inside of annular rib 116. Thus, turning handle 76 is rotatability mounted relative to receptacle 100, 101.

Lower edge 120 of wall panel 98 is pulled down relative to receptacle 100,101 and contained by wall panel holder 102. This wall panel holder 102 consists of a suitable plastic or, for example, aluminium and has a largely U-shaped profile that tapers into a V-shape on the lower section of its outside face. The lower end of wall panel holder 102 closes flush with the lower edge of insert shoulder 86 and so can be accommodated by slots 27 or 37 of cross-beams 3 or 4 or by upright 2, with catch shoulders 121 of closure device 99 simultaneously making contact with the outer surfaces of cross-beams 3,4 or upright 2. Closure device 99 and wall panel 98 therefore close flush with cross-beams 3, 4 or uprights 2. Thus, especially in the case of large wall panels 99, twist-free attachment of wall panel 99 to the partition wall system is ensured and, moreover, troublesome slits of light are prevented.

With the closure device of the invention, wall panels can be attached at will to the partition wall system and so may be used as vertical or horizontal screens. With the closure device of the invention, the position of the wall panels can be altered especially quickly and simply on runners and the wall panels are particularly easy to remove from the partition wall system and to replace without the need for tools.

## Claims

1. Partition wall system for offices and the like, with at least one frame of two uprights and at least one cross-beam connecting the uprights and with at least one closure device for wall panels (52; 98), wherein the closure device has at least one plinth-like base part (53; 72), an insert shoulder (54; 86) and a receptacle (100; 101) for a wall panel (52; 98), **characterised by the fact that** the closure device (51; 99) having a bolt head (60) with a bar member, preferably formed by two bars (61, 62), arranged in a recess (59; 85) of the insert shoulder (54; 86), said bar member respectively said two bars each having a ramp-like tapered surface (64) forming leading cams or the like for clamping the base part (53; 72) to the outer surface (25) of an upright or cross-beam (2; 3; 4) for the clamping connection of wall panels (52; 98).

2. Partition wall system of claim 1, **characterised by the fact that** the bolt head (60) is resiliently pretensioned in its locking position.

3. Partition wall system of claim 1 or 2, **characterised by the fact that** the bars (61, 62) are formed on an actuating element, especially an actuating handle (56; 76) or corresponding button accommodated in a recess (57, 96) of the base part (53; 72).

4. Partition wall system of claim 3, **characterised by the fact that** the base part (53, 72) is clamped against the outer surface (25) of the upright or the cross-beam (2; 3; 4) in a first position of the actuating handle (56; 76) and, in a second position, is unlocked, and the actuating handle (56; 76), when in the first position, does not project beyond the lateral outer walls of the base part (53; 72), and, in the second position, projects laterally in relation to the outer walls.

5. Partition wall system of any of claims 3 and 4, **characterised by the fact that** the actuating handle (56; 76) on both sides of the closure device (51; 99) each has a handle or lever (65; 91) and a corresponding double-sided design.

6. Partition wall system of any of the previous claims, **characterised by** one or more runners (88) that are arranged laterally and/or on the floor-side of the insert shoulders (86).

7. Partition wall system of any of the previous claims, **characterised by the fact that** the actuating handle (56, 76) comprises a bolt (58; 71) on which the bars (61, 62) are arranged.

8. Partition wall system of any of the previous claims, **characterised by the fact that** provision is made for an elastically compressible material in the form of a plastic sleeve (73), an annular spring or the like for bolt pretensioning.

9. Partition wall system of claim 8, **characterised by the fact that** the elastically compressible material (73) surrounds the bolt (71) and by means of one or more washers (74, 75) and a suitable fixing, such as a tensioning washer (77) or the like, is fixed on the bolt.

10. Partition wall system of any of claims 7 to 9, **characterised by the fact that** the bolt (71) is connected via an insert connector or screw connection or the like to the actuating element (76) such that it cannot rotate.

11. Partition wall system of any of the previous claims, **characterised by the fact that** the receptacle (100,101) features a recess for double-sided containment of the wall panel (98), with the wall panel (98) being fixed in the receptacle (100,101) by an plug, screw or adhesive connection or the like.

12. Partition wall element of claim 11, **characterised by the fact that** the receptacle (100,101) for containment of a corner of the wall panel (98) has an L-shaped design.

13. Partition wall system of claim 11 or 12, **characterised by the fact that** the receptacle (100,101) has a two-part design.

14. Partition wall of any of the previous claims, **characterised by the fact that** it contains a wall panel holder (102) which is especially formed as a U-shaped profile rail, the lower external faces of which taper into a V-shape and which surrounds and holds the edge of the lower side of the wall panel (120).

15. Closure device for wall panels of a partition wall system for offices or the like, with at least one frame of two uprights and at least one cross-beam connecting the uprights, said closure device having at least one plinth-like base part (53, 72), an insert shoulder (54, 86) and a receptacle (100, 101) for said wall panel (52, 98), **characterised by the fact that** said closure device (51, 99) has a bolt head (50) with leading cams for clamping the base part (53, 72) to the outer surface (25) of said upright or cross-beam (2, 3, 4) for the clamping connection of said wall panels (52, 98), said bolt head (60) having a bar member, preferably formed by two bars; arranged in a recess (59, 85) of the insert shoulder (54, 86), said bar member respectively said two bars each having a ramp-like tapered surface (64) forming said cam.

## Patentansprüche

1. Trennwandsystem für Büros und dgl., mit mindestens einem Rahmen aus zwei Ständern und mindestens einem die Ständer verbindenden Querbalken und mit mindestens einer Verschlussvorrichtung für Paneelwände (52; 98), welche mindestens ein sockelartiges Basisteil (53; 72), eine Steckschulter (54; 86) und eine Aufnahme (100; 101) für eine Paneelwand (52; 98) aufweist, **dadurch gekennzeichnet, dass** die Verschlussvorrichtung (51; 99) in einer Ausnehmung (59; 85) der Steckschulter (54; 86) einen Riegelkopf (60) mit einem vorzugsweise aus zwei Riegeln (61, 62) gebildeten Riegelelement aufweist, die in einer Ausnehmung (59; 85) der Steckschulter (54; 86) angeordnet sind, wobei das Riegelelement jeweils zwei Riegel mit jeweils einer rampenartigen Schrägfläche (64) zur Bildung von Führungsnocken oder dgl. für die Verspannung des Basisteils (53; 72) gegenüber der Außenfläche (25) eines Ständers oder Querbalkens (2; 3; 4) aufweisen für die klemmende Verbindung von Paneelwänden (52; 98).

2. Trennwandsystem nach Anspruch 1, **dadurch gekennzeichnet, dass** der Riegelkopf (60) beim Verriegeln federnd vorgespannt wird.

3. Trennwandsystem nach Anspruch 1 oder 2, **dadurch gekennzeichnet, dass** die Riegel (61, 62) an einem Betätigungselement, insbesondere einem Betätigungsgriff (56; 76) oder entsprechendem Knopf ausgebildet sind, welches in einer Ausnehmung (57, 96) des Basisteils (53; 72) aufgenommen ist.

4. Trennwandsystem nach Anspruch 3, **dadurch gekennzeichnet, dass** das Basisteil (53, 72) gegenüber der Außenfläche (25) des Ständers oder Querbalkens (2; 3; 4) in einer ersten Position des Betätigungsgriffs (56; 76) verspannt und in einer zweiten Position entriegelt ist, wobei der Betätigungsgriff (56; 76) in der ersten Position die seitlichen Außenwände des Basisteils (53; 72) nicht überragt und in der zweiten Position in Bezug zu den Außenwänden seitlich hervorsteht.

5. Trennwandsystem nach einem der Ansprüche 3 und 4, **dadurch gekennzeichnet, dass** der Betätigungsgriff (56; 76) auf beiden Seiten der Verschlussvorrichtung (51; 99) je einen Griff oder Hebel (65; 91) aufweist und entsprechend doppelseitig ausgeführt ist.

6. Trennwandsystem nach einem der vorhergehenden Ansprüche, **gekennzeichnet durch** eine oder mehrere Gleitkufen (88), die an der Steckschulter (86) seitlich und/oder bodenseitig angeordnet sind.

7. Trennwandsystem nach einem der vorhergehenden Ansprüche, **dadurch gekennzeichnet, dass** der Betätigungsgriff (56; 76) einen Bolzen (58; 71) umfasst, an dem die Riegel (61, 62) angeordnet sind.

8. Trennwandsystem nach einem der vorhergehenden Ansprüche, **dadurch gekennzeichnet, dass** für die Riegelvorspannung ein elastisch kompressibles Material in Form einer Kunststoffhülse (73), eine Ringfeder oder dgl. vorgesehen ist.

9. Trennwandsystem nach Anspruch 8, **dadurch gekennzeichnet, dass** das elastisch kompressible Material (73) den Bolzen (71) umgibt und mittels einer oder mehrerer Beilagscheiben (74, 75) sowie einer geeigneten Fixierung, wie einer Spannbeilagscheibe (77) oder dgl. am Bolzen festgelegt ist.

10. Trennwandsystem nach einem der Ansprüche 7 bis 9, **dadurch gekennzeichnet, dass** der Bolzen (71) mit dem Betätigungselement (76) drehfest über eine Steckverbindung oder Schraubverbindung oder dgl. verbunden ist.

11. Trennwandsystem nach einem der vorhergehenden Ansprüche, **dadurch gekennzeichnet, dass** die Aufnahme (100, 101) eine Ausnehmung zur beidseitigen Umfassung der Paneelwand (98) aufweist, wobei die Paneelwand (98) mit einer Steck-, Schraub- oder Klebverbindung oder dgl. in der Aufnahme (100, 101) fixiert ist.

12. Trennwandsystem nach Anspruch 11, **dadurch gekennzeichnet, dass** die Aufnahme (100, 101) zur Umfassung einer Ecke der Paneelwand (98) L-förmig ausgeführt ist.

13. Trennwandsystem nach Anspruch 11 oder 12, **dadurch gekennzeichnet, dass** die Aufnahme (100, 101) zweiteilig ausgeführt ist.

14. Trennwandsystem nach einem der vorhergehenden Ansprüche, **dadurch gekennzeichnet, dass** sie einen Paneelwandhalter (102) umfasst, der insbesondere als U-förmige Profilschiene mit sich V-förmig verjüngenden unteren Außenseiten ausgebildet ist, die die Kante der Paneelwandunterseite (120) umschließt und hält.

15. Verschlussvorrichtung für ein Trennwandelementsystem, für Büros und dgl., mit mindestens einem Rahmen aus zwei Ständern und mindestens einem Querbalken, welche die Ständer verbindet, wobei die Verschlussvorrichtung mindestens ein sockelartiges Basisteil (53, 72), eine Steckschulter (54, 86) und eine Aufnahme (100; 101) für die Panelwand (52; 98) aufweist, **dadurch gekennzeichnet, dass** die Verschlussvorrichtung (51, 99) einen Riegelkopf (50) mit Führungsnocken für die Verklemmung des Basisteils (53, 72) gegenüber der Außenfläche (25) des Ständers oder Querbalkens (2, 3, 4) für die klemmende Verbindung der Panelwände (52, 98) aufweist, wobei der Riegelkopf (60) ein Riegelelement aufweist, welches vorzugsweise aus zwei Riegeln gebildet ist, und in einer Ausnehmung (59, 85) der Steckschulter (54, 86) angeordnet ist, wobei das Riegelelement jeweils zwei Riegel aufweist, mit jeweils einer rampenartigen Schrägfläche (64) zur Bildung des Nockens.

## Revendications

1. Système de cloisons pour bureaux et analogues, comprenant au moins un cadre constitué de deux montants et d'au moins une traverse reliant les montants et comprenant au moins un dispositif de fermeture pour panneaux muraux (52 ; 98), dans lequel le dispositif de fermeture comprend au moins une partie de base analogue à une plinthe (53 ; 72), un épaulement à insérer (54 ; 86) et un socle (100 ; 101) pour panneau mural (52 ; 98), **caractérisé en ce que** le dispositif de fermeture (51 ; 99) présente une tête de vis (60) comprenant un élément à barres, de préférence formé de deux barres (61, 62), disposé dans un évidement (59 ; 85) de l'épaulement à insérer (54 ; 86), ledit élément à barres, respectivement lesdites deux barres ayant chacune une surface inclinée en forme de rampe (64) formant des cames ou analogues pour serrer la partie de base (53 ; 72) sur la surface extérieure (25) d'un montant ou d'une traverse (2 ; 3 ; 4) pour l'assemblage par serrage des panneaux muraux (52 ; 98).

2. Système de cloisons selon la revendication 1, **caractérisé en ce que** la tête de vis (60) est élastiquement précontraintes dans sa position de verrouillage.

3. Système de cloisons selon la revendication 1 ou 2, **caractérisé en ce que** les barres (61, 62) sont formées sur un élément d'actionnement, en particulier une manette d'actionnement (56 ; 76) ou un bouton correspondant logé dans un évidement (57, 96) de la partie de base (53 ; 72).

4. Système de cloisons selon la revendication 3, **caractérisé en ce que** la partie de base (53, 72) est verrouillée contre la surface extérieure (25) du montant ou de la traverse (2 ; 3 ; 4) dans une première position de la manette d'actionnement (56 ; 76) et, dans une deuxième position, est déverrouillée, et la manette d'actionnement (56 ; 76), lorsqu'elle est dans la première position, ne dépasse pas des parois latérales externes de la partie de base (53 ; 72) et, dans la deuxième position, dépasse latéralement des parois externes.

5. Système de cloisons selon l'une quelconque des revendications 3 et 4, **caractérisé en ce que** la manette d'actionnement (56 ; 76) comprend, de chaque côté du dispositif de fermeture (51 ; 99) une poignée ou un levier (65 ; 91) et présente une structure accessible des deux côtés correspondante.

6. Système de cloisons selon l'une quelconque des revendications précédentes, **caractérisé par** une ou plusieurs glissières (88) qui sont disposées latéralement et/ou sur le côté plancher des épaulements à insérer (86).

7. Système de cloisons selon l'une quelconque des revendications précédentes, **caractérisé en ce que** la manette d'actionnement (56, 76) comprend une vis (58 ; 71) sur laquelle sont disposées les barres (61, 62).

8. Système de cloisons selon l'une quelconque des revendications précédentes, **caractérisé en ce que** une matière élastiquement compressible en forme de gaine de matière plastique (73), de ressort annulaire ou analogue est fournie pour précontraindre la vis.

9. Système de cloisons selon la revendication 8, **caractérisé en ce que** la matière élastiquement compressible (73) entoure la vis (71) et, par l'intermédiaire d'une ou plusieurs rondelles (74, 75) et d'une fixation appropriée telle qu'un circlips (77) ou analogue, est fixée sur la vis.

10. Système de cloisons selon l'une quelconque des revendications 7 à 9, **caractérisé en ce que** la vis (71) est reliée, au moyen d'un connecteur à insérer ou d'un assemblage par vis ou analogue, à l'élément d'actionnement (76) de sorte qu'elle ne puisse pas tourner.

11. Système de cloisons selon l'une quelconque des revendications précédentes, **caractérisé en ce que** le socle (100, 101) présente un évidement, destiné à contenir deux côtés du panneau mural (98), le panneau mural (98) étant fixé dans le socle (100, 101) par une cheville, une vis ou un raccord adhésif ou analogue.

12. Élément de cloison selon la revendication 11, **caractérisé en ce que** le socle (100, 101), destiné à contenir un coin du panneau mural (98), a un profil en forme de L.

13. Système de cloisons selon la revendication 11 ou 12, **caractérisé en ce que** le socle (100, 101) a une structure en deux parties.

14. Cloison selon l'une quelconque des revendications précédentes, **caractérisé en ce qu'**il contient un support de panneau mural (102) qui est spécialement conçu sous la forme d'un rail profilé en U dont les faces inférieures externes s'effilent en forme de V et qui entoure et maintient le bord de la face inférieure du panneau mural (120).

15. Dispositif de fermeture pour panneaux muraux d'un système de cloisons pour bureaux ou analogues, comprenant au moins un cadre constitué de deux montants et d'au moins une traverse reliant les montants, ledit dispositif de fermeture comprenant au moins une partie de base analogue à une plinthe (53, 72), un épaulement à insérer (54, 86) et un socle (100, 101) pour ledit panneau mural (52, 98), **caractérisé en ce que** ledit dispositif de fermeture (51, 99) présente une tête de vis (50) comprenant des cames pour serrer la partie de base (53, 72) sur la surface extérieure (25) dudit montant ou de ladite traverse (2, 3, 4) pour l'assemblage par serrage desdits panneaux muraux (52, 98), ladite tête de vis (60) comprenant un élément à barres, de préférence formé de deux barres, disposé dans un évidement (59, 85) de l'épaulement à insérer (54, 86), ledit élément à barres, respectivement lesdites deux barres, ayant chacune une surface inclinée en forme de rampe (64) formant ladite came.
